# EUROPÄISCHE PATENTANMELDUNG

(11) **EP 1 411 476 A2**
(43) Veröffentlichungstag der Anmeldung: **21.04.2004**
(21) Anmeldenummer: 03022455.4
(22) Anmeldetag: 07.10.2003
(51) Int. Cl.: G07C 9/00

(54) **Lesevorrichtung zur Identifikation von berechtigten Personen**

(30) Priorität: 07.10.2002 DE 10246678
(71) Anmelder: EFF-EFF FRITZ FUSS GMBH & CO. KG AA, 72458 Albstadt-Ebingen (DE)
(72) Erfinder: Hörz, Stefan, 72459 Albstadt (DE); Wolpert, Gerd, 72458 Albstadt (DE)
(74) Vertreter: Lang, Friedrich, Dipl.-Ing.

(57) **Zusammenfassung**

Die Erfindung betrifft eine Lesevorrichtung zur Identifikation von berechtigten Personen, die einen biometrischen Sensor und ein diesen gegebenenfalls schaltendes Schaltelement beinhaltet. Dabei bestimmt die Art und Weise der Anordnung eines Handteiles auf dem biometrischen Sensor, wie das Schaltelement schaltet. Dies wird bevorzugt dadurch erreicht, dass der biometrische Sensor beweglich auf einem Schaltelement mit einem vorgegebenen Druckpunkt angeordnet wird. Durch Drücken des biometrischen Sensors wird dann das Schaltelement bedient und die Lesevorrichtung in Betrieb gesetzt. Dies hat den Vorteil, dass der biometrische Sensor in der Lesevorrichtung erst dann in Betrieb gesetzt wird, wenn ein Lesevorgang erforderlich ist und wenn die Art und Weise, mit der ein Handteil auf diesen gelegt wird, bestimmte Parameter erfüllt. Dadurch werden unnötige Lesevorgänge vermieden. Dies spart Strom und Zeit und erhöht gleichzeitig die Lesegenauigkeit wie auch die Reproduzierbarkeit der Lesevorgänge des biometrischen Sensors. Vorteilhafterweise kann so eine erfindungsgemäße energiesparende Lesevorrichtung zur Identifikation von berechtigten Personen in einer Zugangskontrolleinrichtung benutzt werden. Dabei kann eine erfindungsgemäße Lesevorrichtung besonders gut in einer nur schwer mit Strom zu versorgenden Zugangskontrolleinrichtung, wie zum Beispiel in einem Türschild, Anwendung finden.

## Beschreibung

Die Erfindung betrifft eine Lesevorrichtung zur Identifikation von berechtigten Personen, die einen biometrischen Sensor und ein Schaltelement, das den biometrischen Sensor gegebenenfalls in Betriebsbereitschaft versetzt, beinhaltet.

Die biometrische Erkennung aufgrund von Hand- oder Handflächenmerkmalen ist bekannt und Stand der Technik. Lesevorrichtungen dieser Art sind dahingehend vorteilhaft, dass die Berechtigungsidentifikation von Personen nicht über Schlüssel oder manuell einzugebende Codes erfolgt, welche verloren, gestohlen oder vergessen werden können.

Lesevorrichtungen dieser Art weisen jedoch das Problem auf, dass die Lesequalität und die Reproduzierbarkeit des Lesevorganges von der Art und Weise der Anordnung eines Handteiles, wie zum Beispiel einer Handfläche, eines oder mehrer Finger, einer Fingerkuppe oder ähnliches, auf oder in dem biometrischen Sensor abhängen. Erfolgt die Anordnung des Handteiles nicht genau entsprechend der geforderten Art und Weise der Anordnung um einen Lesevorgang erfolgreich durchzuführen, werden Lesevorgänge in Gang gesetzt, die nicht zur erwünschten Identifikation führen. Da biometrische Sensoren elektrisch betrieben werden, verbrauchen sie dabei unnötig viel Strom. Der Stromverbrauch wird weiterhin erhöht, wenn das Lesegerät in permanenter Betriebsbereitschaft gehalten wird, oder sich selbst unbeabsichtigt in Betrieb setzt. Letzteres geschieht zum Beispiel dann, wenn zur Inbetriebnahme der Lesevorrichtung ein Annäherungsschalter eingebaut ist und dieser die Annäherung einer Person feststellt, diese Person aber zum Beispiel nur dicht an der Lesevorrichtung vorbeigeht. Dieser erhöhte Strombedarf ist insbesondere dann problematisch, wenn die Lesevorrichtung z.B. mit einer Batterie betrieben werden muss, weil eine andere Stromversorgung nicht möglich ist.

Der Erfindung liegt die Aufgabe zugrunde, die Sensorik möglichst energiesparend zu betreiben und dabei gleichzeitig die Reproduzierbarkeit und die Lesequalität des Lesevorganges zu verbessern.

Die Aufgabe wird dadurch gelöst, dass in der Lesevorrichtung ein Schaltelement angeordnet ist, dessen Schalteigenschaften von der Art und Weise der Anordnung mindestens eines Handteiles auf dem biometrischen Sensor abhängen. Entspricht die Art und Weise der Anordnung des Handteiles den Vorgaben, wird der biometrische Sensor von dem Schaltelement in Betrieb gesetzt und der Lesevorgang beginnt. So wird auch ein unbeabsichtigtes Aktivieren der Lesevorrichtung vermieden.

Grundgedanke ist es also, nicht nur das bloße Vorhandensein eines Handteiles zu bestimmen und dann den biometrischen Sensor in Betrieb zu setzen, sondern beim Anordnen des Handteiles gleichzeitig bestimmte Parameter abzufragen, die eine Verbesserung der Reproduzierbarkeit und der Lesequalität des Lesevorganges garantieren. Dies führt dazu, dass die Lesevorrichtung nur dann in Gang gesetzt wird, wenn Lesevorgänge erfolgen sollen und diese auch zum Erfolg führen können. Somit wird gleichzeitig Energie gespart und die Reproduzierbarkeit und die Lesequalität des Lesevorganges erhöht.

In einer solchen Lesevorrichtung können unterschiedliche biometrische Sensoren zur Erkennung von Hand- oder Handflächenmerkmalen, wie zum Beispiel Fingerabdrücke, Fingerformen oder Handflächenabdrücke oder Handflächengeometrien, in der Lesevorrichtung verwendet werden. So gibt es zum Beispiel zur Erkennung von Fingerabdrücken sogenannte Flächensensoren, die einen ganzen Fingerabdruck am Stück einlesen, oder Zeilensensoren, bei denen der Finger über den Sensor bewegt wird und zeilenweise erfasst wird.

Weiterhin versteht man unter der Art und Weise der Anordnung des Handteils unter anderem die Position und den Anpressdruck mit der das Handteil zum Beispiel auf einen Sensor gelegt wird. Dabei hängt die Erfassung der Art und Weise der Anordnung auch von der Funktionsweise des biometrischen Sensors ab. So kann zum Beispiel bei Zeilensensoren die einen Fingerabdruck oder eine Handform zeilenweise erfassen, neben den oben genannten Merkmalen auch die Geschwindigkeit, mit der das Handteil über den Sensor bewegt wird, gemeint sein.

Eine bevorzugte Ausführungsform der Erfindung beinhaltet einen biometrischen Sensor, der sich selbsttätig ausschaltet, wenn der Lesevorgang beendet ist. Dies kann zum Beispiel durch eine Einrichtung erfolgen, die nach Ablauf einer vorgegeben Zeitspanne die Stromversorgung des biometrischen Sensors unterbricht.

Eine weitere bevorzugte Ausführungsform der Erfindung besteht darin, dass der biometrische Sensor derart beweglich in der Lesevorrichtung angeordnet ist, dass dieser zum Auslösen eines Schaltvorgangs auf das Schaltelement gedrückt werden kann. Dadurch wird es möglich, durch Drücken des biometrischen Sensors das Schaltelement zu bedienen. Dies bedeutet, dass gleichzeitig während die Lesevorrichtung in Betriebsbereitschaft versetzt wird, der Lesevorgang beginnen kann.

Eine zusätzliche weitere bevorzugte Ausführungsform besteht darin, dass das Schaltelement einen vorgegebenen Druckpunkt zum Schalten hat, bei dem ein Mindestanpressdruck des Handteiles vorhanden ist. Damit wird sichergestellt, dass stets ein gleicher, optimaler Anpressdruck des Handteiles vorgegeben werden kann. Dies verbessert die Reproduzierbarkeit des Lesevorganges des biometrischen Sensors und auch die Lesequalität und Zuverlässigkeit des Lesevorganges wird erhöht.

Vorteilhafterweise ist das Schaltelement ein Druckschalter. Dies kann ein elektrischer Taster sein, der als passives Element im Ruhezustand keinen Strom verbraucht und somit zur Energieeinsparung beiträgt.

Es ist weiterhin vorteilhaft, dass das Schaltelement eine Vorrichtung beinhaltet, die dem Benutzer signalisiert, dass der Mindestanpressdruck des Handteils vorhanden ist. Dies erhöht die Bedienungssicherheit und den Komfort. Signalisieren kann sich zum Beispiel auf eine taktile, geräuschliche oder optische Übermittlung an den Benutzer der Erfindung beziehen.

Ein solches Schaltelement, welches dem Benutzer signalisiert, dass der Mindestanpressdruck des Handteils vorhanden ist, kann zum Beispiel eine Schnappscheibe sein, auch als Knackfrosch bezeichnet, die bei Erreichen eines Mindestanpressdrucks einschnappt und dabei dem Benutzer eine taktile und geräuschvolle Rückmeldung liefert.

Es ist weiterhin vorteilhaft, dass der biometrische Sensor horizontal, also 0° gegen die Horizontale geneigt, oder bis zu 45° unterhalb der Horizontalen geneigt angeordnet ist. Vorzugsweise ist der ergonomisch günstige Winkel von ca. 45° zu wählen.

Eine vorteilhafte Weiterbildung der Erfindung besteht darin, dass die Lesevorrichtung in einer Zugangsberechtigungsvorrichtung angeordnet ist, die den Zugang oder den Zugriff zu gesicherten Räumen, Gebäuden, Schränken, Behältnissen, Geräten oder Anwendungen ermöglicht. Da die Lesevorrichtung besonders energiesparend arbeitet, ist eine breite Einsatzmöglichkeit an Orten, die nur schwer mit elektrischem Strom versorgt werden können, möglich. So kann die Erfindung vorteilhafterweise in Zutrittskontrollsystemen eingesetzt werden, die sich in einem Türschild befinden und nur über Batterie betrieben werden können.

Die Erfindung wird nachfolgend anhand von in der Zeichnung dargestellten Ausführungsbeispielen weiter erläutert. Darin zeigen die einzelnen Figuren:
Fig. 1 eine Tür, in der eine Zugangsberechtigungsvorrichtung im Türschild angeordnet ist;
Fig. 2 die perspektivische Darstellung einer Lesevorrichtung zur Identifikation von berechtigten Personen, die in einer Zugangsberechtigungsvorrichtung in einem Türschild angeordnet ist;
Fig. 3 in schematischer Darstellung einen in Fig.2 angezeigten Schnitt A-A durch eine Lesevorrichtung mit einem Druckschaltelement, gemäß einem ersten Ausführungsbeispiel;
Fig. 4 in schematischer Darstellung einen in Fig.2 angezeigten Schnitt A-A durch eine Lesevorrichtung mit einem Druckschaltelement gemäß einem zweiten Ausführungsbeispiel.

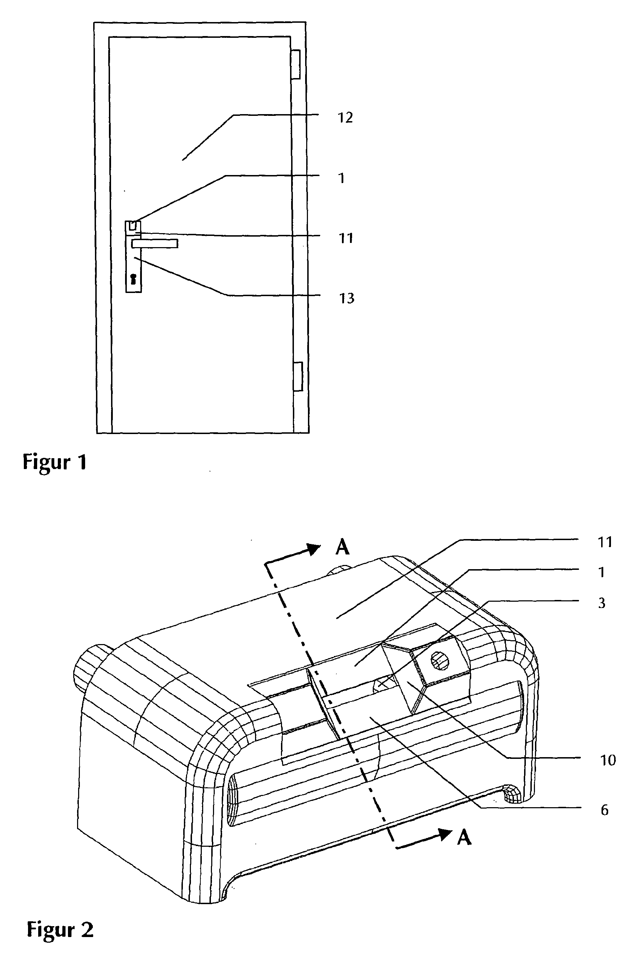

Im einzelnen zeigt Figur 1 eine Lesevorrichtung 1 zur Identifikation von berechtigten Personen, welche in einer Zugangsberechtigungsvorrichtung 11 in einem Türschild 13 in einer Tür 12 angeordnet ist.

Dabei zeigt Figur 2 eine vergrößerte, genauere und ausschnittsweise Darstellung der in Fig. 1 dargestellten Lesevorrichtung 1 zur Identifikation von berechtigten Personen, welche in der Zugangsberechtigungsvorrichtung 11 im Türschild 13 angeordnet ist. Dabei ist der biometrischen Sensor 3 in dieser Ausführungsform als Zeilensensor ausgebildet und von einer Haltevorrichtung 6 eingefasst. Diese Haltevorrichtung 6 ist so flexibel ausgebildet, dass Bewegungen des darunter angeordneten biometrischen Sensors 3 in Richtung des Druckschaltelementes ermöglicht werden. Der biometrische Sensor 3 und die flächige Halterungsvorrichtung 6 sind beide ergonomisch günstig unter 45 ° gegen die Horizontale geneigt. Zu beiden Seiten des biometrischen Sensors 3 sind Handteilführungen 10 angeordnet. Diese sind in der Fig. 1 so ausgebildet, dass der Benutzer seine Fingerkuppe nur in der erforderlichen Position über den Zeilensensor 3 führen kann.

In dieser Ausführungsform können also gleichzeitig beim Anordnen des Handteiles mindestens die beiden Parameter Anpressdruck und Lage der Fingerkuppe des Fingers vorgegeben werden. Dies garantiert bereits eine deutliche Verbesserung der Reproduzierbarkeit und der Lesequalität des Lesevorganges und führt dazu, dass die Lesevorrichtung nur dann in Gang gesetzt wird, wenn Lesevorgänge erfolgen sollen und diese auch zum Erfolg führen können. Somit wird gleichzeitig Energie gespart und die Reproduzierbarkeit und die Lesequalität des Lesevorganges erhöht.

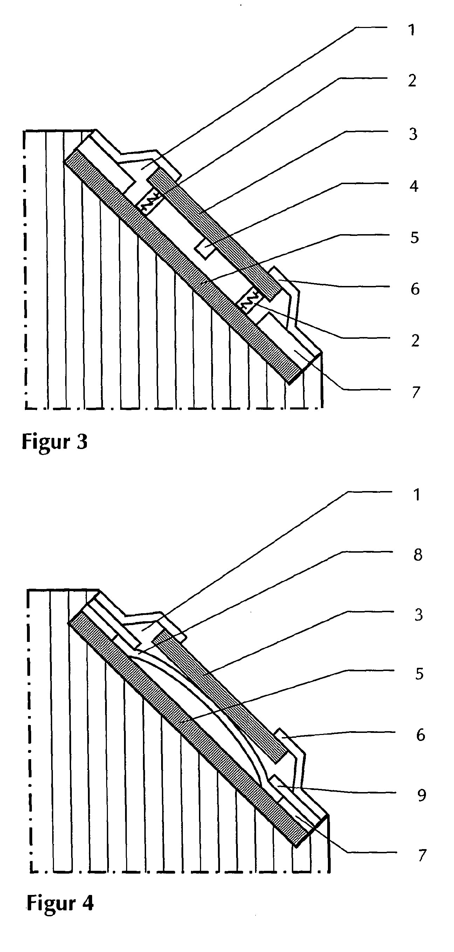

Figur 3 stellt in schematischer Darstellung einen in Fig. 2 angezeigten Schnitt A-A durch die Lesevorrichtung 1 dar, bei welcher als Druckschaltelement ein Druckschalter verwendet wird. Dabei ist ein Flächensensor zur Erkennung von Fingerabdrücken 3 beweglich gelagert und mit Federelementen 2 beaufschlagt. Durch Herunterdrücken des biometrischen Sensors 3 gegen die Federkraft wird ein an dessen Unterseite befindlicher elektrischer Kontakt 4 geschlossen. Dadurch werden der biometrische Flächensensor 3 und die Lesevorrichtung 1 in Betriebsbereitschaft versetzt.

Der notwendige Anpressdruck um den elektrischen Kontakt 4 auf die Leiterplatte 5 zu drücken, ergibt sich aus der Federsteifigkeit der Federelemente 2 und wird so eingestellt, dass nur dann die betriebsbereit geschaltet wird, wenn sich ein optimales Leseergebnis des biometrischen Sensors 3 bei Vorhandensein dieses Anpressdruckes ergibt. Der notwendige Federweg wird durch Abstandshaltevorrichtungen 7 vorgegeben.

Figur 4 zeigt in schematischer Darstellung eine weitere Ausführungsform einer Lesevorrichtung 1 zur Identifikation von berechtigten Personen, in der das Schaltelement eine Schnappscheibe 8, auch als Knackfrosch bezeichnet, aufweist. Dabei bezieht sich die Fig. 4 auf den in Fig. 2 angezeigten Schnitt A-A. Auch hier wird ein biometrischer Flächensensor 3 zur Erkennung von Fingerabdrücken durch Drücken in Betrieb gesetzt. Dabei wird der biometrische Sensor 3 auf die nach außen gebogene Schnappscheibe 8 gedrückt, diese beult sich nach innen ein, und wenn ein definierter Anpressdruck vorhanden ist, wird ein elektrischer Kontakt geschaltet. Dieses Einbeulen der Schnappscheibe 8 ist begleitet von einem fühl- und hörbaren Knacken. Dadurch erkennt der Benutzer, dass der notwendige Anpressdruck vorhanden ist und dass die Lesevorrichtung betriebsbereit geschaltet wurde.

Die Schnappscheibe 8 ist auf einem Basiselement 5 angeordnet und an ihren Seiten umgeben von Distanzelementen 7, die dem Ausgleich der Dicke der Schnappscheibe 8 dienen. Auf diesen Distanzelementen 7 und den Enden der Schnappscheibe 8 sind Abstands- und Halteelemente 9 aufgebracht. Diese halten die Schnappscheibe 8 und sichern sie gegen Verrutschen.

## Patentansprüche

1. Lesevorrichtung (1) zur Identifikation von berechtigten Personen, die einen biometrischen Sensor (3) und ein Schaltelement, welches den biometrischen Sensor (3) gegebenenfalls in Betriebsbereitschaft versetzt, beinhaltet,
**dadurch gekennzeichnet,**
**dass** die Schalteigenschaften des Schaltelementes abhängig von der Art und Weise der Anordnung mindestens eines Handteiles auf dem biometrischen Sensor (3) vorgegeben sind.

2. Lesevorrichtung nach Anspruch 1,
**dadurch gekennzeichnet,**
**dass** sich der biometrische Sensor (3) nach Beendigung des Lesevorganges selbsttätig wieder ausschaltet.

3. Lesevorrichtung nach Anspruch 2,
**dadurch gekennzeichnet,**
**dass** der biometrische Sensor (3) derart beweglich in der Lesevorrichtung angeordnet ist, dass dieser zum Auslösen eines Schaltvorgangs auf das Schaltelement gedrückt werden kann.

4. Lesevorrichtung nach Anspruch 3,
**dadurch gekennzeichnet,**
**dass** das Schaltelement einen vorgegebenen Druckpunkt zum Schalten hat, bei dem ein Mindestanpressdruck des Handteils vorhanden ist.

5. Lesevorrichtung nach Anspruch 4,
**dadurch gekennzeichnet,**
**dass** das Schaltelement ein Druckschalter ist.

6. Lesevorrichtung nach Anspruch 5,
**dadurch gekennzeichnet,**
**dass** das Schaltelement eine Vorrichtung beinhaltet, die dem Benutzer signalisiert, dass der Mindestanpressdruck des Handteils vorhanden ist.

7. Lesevorrichtung nach einem der Ansprüche 5 oder 6,
**dadurch gekennzeichnet,**
**dass** das Schaltelement eine Schnappscheibe (8) beinhaltet, die bei Erreichen eines Mindestanpressdrucks einschnappt.

8. Lesevorrichtung nach einem der Ansprüche 1 bis 7,
**dadurch gekennzeichnet,**
**dass** der biometrischen Sensor 0° bis 45°, bevorzugt ca. 45°, unter die Horizontale geneigt ist.

9. Lesevorrichtung nach einem der Ansprüche 1 bis 8,
**dadurch gekennzeichnet,**
**dass** sie in einer Zugangskontrollvorrichtung angeordnet ist.
